# EUROPEAN PATENT SPECIFICATION

(11) **EP 3 381 329 B1**
(45) Date of publication and mention of the grant of the patent: **25.12.2019**
(21) Application number: 18164775.1
(22) Date of filing: 28.03.2018
(51) Int. Cl.: A47B 96/20, B29C 70/70, B29C 39/10, A47F 11/06

(54) **A PIECE OF FURNITURE WITH FABRIC EMBEDDED IN THE INTERIOR THEREOF, AND CORRESPONDING METHOD FOR MAKING A PIECE OF FURNITURE**
EIN MÖBEL MIT GEWEBE IN IHREM INNENRAUM UND ENTSPRECHENDES VERFAHREN ZUR HERSTELLUNG EINES MÖBELMATERIALS
PIECE DE MEUBLE AVEC TISSU INCORPORÉ DANS L'INTÉRIEUR DE CELLE-CI ET PROCÉDÉ CORRESPONDANT DE FABRICATION D'UNE PIÈCE DE MOBILIER

(30) Priority: 31.03.2017 IT 201700035668
(43) Date of publication of application: 03.10.2018
(73) Proprietor: Rubelli S.p.A., 30124 Venezia (IT)
(72) Inventor: MUGNONI, Davide, 30124 Venezia (IT); MARTINUZZI, Marco, 30124 Venezia (IT)
(74) Representative: Mitola, Marco

(56) References cited:
- WO-A2-2011/016015
- FR-A1- 2 706 350
- JP-A- S61 225 014
- Dacryl: "Dacryl collection 2017-2018", Collection, 13 February 2017 (2017-02-13), pages 2017-2018, XP055423448, Retrieved from the Internet: URL:http://www.dacryl.com/wp-content/uploa ds/2017/02/DACRYL-catalogue2017-2018-compl et.pdf [retrieved on 2017-11-09] & Anonymous: "Wayback Machine", , 13 February 2017 (2017-02-13), XP055423461, Retrieved from the Internet: URL:https://web.archive.org/web/*/http://w ww.dacryl.com/catalogue/?lang=en [retrieved on 2017-11-09] & Anonymous: "Nouveau catalogue Dacryl, collection 2017-2018, à consulter", , 13 February 2017 (2017-02-13), XP055423463, Retrieved from the Internet: URL:http://www.dacryl.com/catalogue/?lang= en [retrieved on 2017-11-09]
- Reichhold: "May 2012 POLYLITE 32034-00 Acrylic Modified Clear Casting Resin", , 15 May 2012 (2012-05-15), XP055423589, Retrieved from the Internet: URL:http://www.reichhold.com/documents/150 5_POLYLITE3203400.pdf [retrieved on 2017-11-10]
- Laird Laird ET AL: "NI/CU POLYESTER TAFFETA FABRIC WITH ANTI-FRAY 3035-787Nickel/Copper", , 3 November 2015 (2015-11-03), XP055423496, Retrieved from the Internet: URL:https://assets.lairdtech.com/home/bran dworld/files/EMI-DS-FOF-3035-787_11032015. pdf [retrieved on 2017-11-09]

## Description

### FIELD OF APPLICATION

The present invention refers to a piece of furniture with fabric embedded in the interior thereof, and the corresponding production method.

### PRIOR ART

As is known, in the field of furniture there is an ongoing search for innovative decorative shapes capable of resulting in various chromatic effects and original designs that withstand the test of time and are not subject to abrasion and wear.

In this regard, the prior art contains solutions for furniture, or parts thereof, that involve, for example, doors, shelves, seat backs, and seats that include decorative patterns coated with transparent material such as, for example, glass or plexiglass.

Document FR 2 706 350 discloses a method of casting a liquid polyester resin between two sheets of glass, wherein plastic keepers adhesively bonded all around the sheets of glass completely seal the panel.

Document WO 2011/016015 A2 discloses a procedure to elaborate metallized fabrics.

The purpose of such a glass or plexiglass coating is to protect the decorative pattern.

The solutions of the prior art have some drawbacks and limitations, which are listed below.

For example, there are some known decorative pattern solutions that call for metal sheets, typically made of precious metals such as gold, which are coated with plexiglass or glass.

These solutions, however, are very costly and do not allow for the creation of a three-dimensional decorative pattern: in other words, the metal sheets are pressed between two transparent layers.

Such metal decorative patterns are therefore quite limited in terms of geometry and coloring.

In order to broaden the range of decorative patterns, it is possible to create a fabric intended for the making of PMMA layers in which the fabric is "embedded."

The choice of textile fiber for such a fabric involves a number of problems that need to be solved.

For example, natural animal fibers (typically silk) can be used: the process of working with PMMA, however, significantly damages the fiber, which ends up being almost completely worn out.

It is also possible to consider using natural plant fibers (such as cotton and linen): here again, the process damages the fiber, although less so than in the case of silk. The visual result is a radical change in the appearance of the textile product.

It is also possible to use artificial fibers derived from cellulose (such as viscose, acetate, and cupro, for example): the type of result, however, is more or less comparable to that of natural plant fibers.

### PRESENTATION OF THE INVENTION

Consequently, there is a need to overcome the drawbacks and limitations cited in reference to the prior art.

This requirement is met by a piece of furniture according to claim 1 and by a method for making a piece of furniture according to claim 11.

### DESCRIPTION OF THE DRAWINGS

Further features and benefits of the present invention will be understood more clearly from the following description of its preferred and non-limiting embodiments, in which:

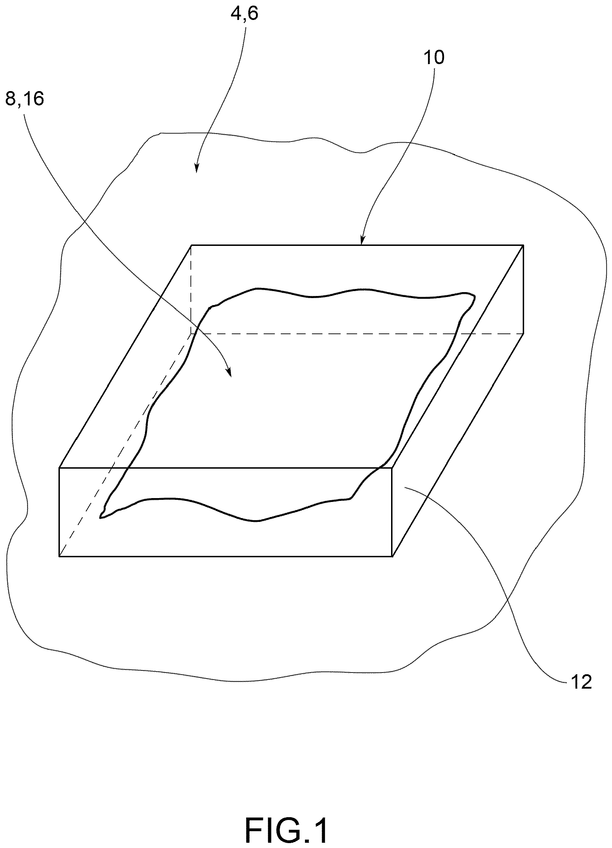

figure 1 shows a schematic view of a piece of furniture according to one embodiment of this invention;

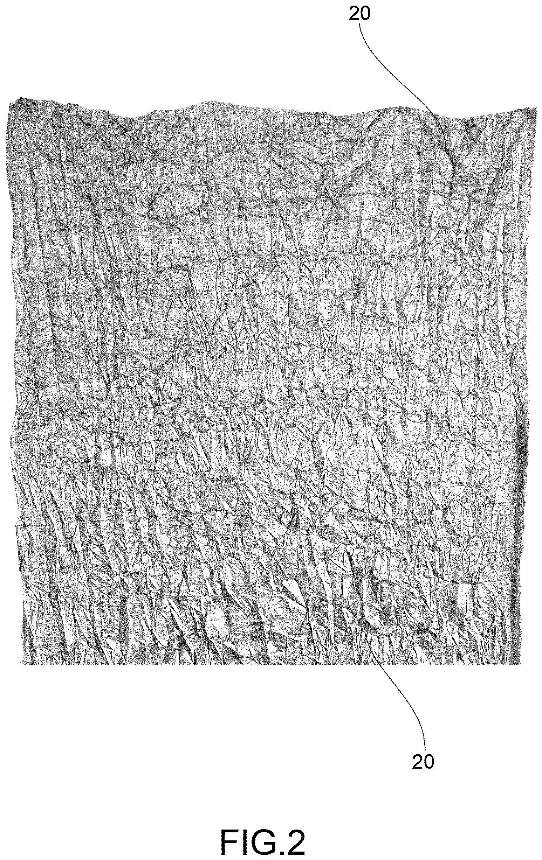

figure 2 shows a plan view of a fabric according to one embodiment of this invention;

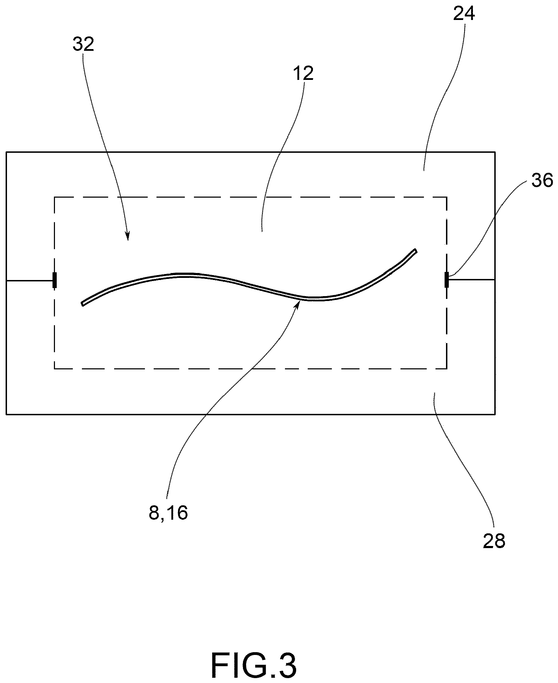

figure 3 shows a schematic view of the method for making a piece of furniture according to this invention.

The elements or parts of elements that are in common between the embodiments described below will be indicated with the same number references.

### DETAILED DESCRIPTION

In reference to the aforementioned figures, the number 4 overall refers to a general schematic view of a piece of furniture according to this invention.

It must be noted that, for the purposes of this invention, the piece of furniture must be considered in a broad sense, as there are no constraints in terms of type, dimensions, and materials (with the exception of the materials in the decorative pattern and the layer in which said decorative pattern is embedded).

Piece of furniture 4 comprises a body 6 provided with at least one panel 10.

Body 6 can have, as shown, any shape and size and can be made of any material.

Panel 10 can in turn have any shape and size, while having some material specifications that will be described in greater detail below.

From a geometric standpoint, panel 10 may be flat but also curved.

In addition, the concept of panel 10 must be understood in a general sense, since it is not necessarily a flat and wide body; panel 10 can also be understood as a small-size insert that is curved, including spherical, taken individually or incorporated, overlapping, or associated with a piece of furniture of various sizes, shape, and material.

In other words it can also be understood as a knick-knack or an insert to be used with the shelf or the door of a piece of furniture and so forth.

Whereupon panel 10 is provided with at least one decorative pattern 8 embedded in a transparent coating layer 12.

Advantageously, decorative pattern 8 comprises a fabric 16 made of extruded bulk-dyed synthetic fibers.

The choice of using synthetic fibers makes it possible to solve a technical problem of the prior art solutions, in that with such a material, no significant changes in the appearance occur as a result of the fibers being embedded in the transparent plastic material of coating layer 12. Therefore, synthetic fibers are capable of ensuring consistency between various production batches. According to a possible embodiment, said synthetic fibers comprise viscose and nylon. Such list of materials is not exhaustive.

The percentage of viscose is comprised between 60% and 90% and, preferably, it is comprised between 70% and 80%. According to a preferred embodiment, the synthetic fibers comprise 75% of viscose and 25% of nylon.

In order to ensure color-fastness, thus avoiding the uncontrolled fading or color-shifting typical of solutions with yarn-dyed fibers, synthetic fibers that are mass-dyed (or bulk-dyed) can advantageously be used. In these solutions involving bulk-dyed fibers, the dye is not applied to the surface of the yarn but is instead applied directly in the yarn extrusion process.

In this way, as we have seen, one avoids color-shifting while the yarn is being embedded in coating 12, and even mere fading of the yarn, which could at least partially cause contamination of coating layer 12.

Indeed, any traces of dye lost by the coating layer of a dyed yarn would inevitably end up spoiling/contaminating coating layer 12.

Transparent coating layer 12 is preferably comprised of PMMA. It is also possible to use alternative materials that are at least partially transparent or translucent or at least partially opaque.

Transparency does not need to be understood in an absolute sense: it is possible to have a partial transparency or opacity. What is important is that coating layer 12 is at least partially visible from the outside through the coating layer.

Coating layer 12 can therefore also be at least partially opaque and comprise cavities or bubbles of various size and density.

According to one embodiment, fabric 16 made of bulk-dyed synthetic fibers has a warp with a linear density of between 150 and 180 dtex.

Preferably, fabric 16 made of bulk-dyed synthetic fibers has a warp with a linear density of 167 dtex.

For example, the weft of fabric 16 is between 30 and 40 tr/cm of metallic strip, also called laminette. Preferably, the weft of fabric 16 is 33.63 tr/cm of metallic strip.

Advantageously, said fabric 16 is at least partially metallized.

The metallization, better described below, provides a metallic surface effect that allows for accentuated, but not excessive, light reflection. Such metallization, combined with the creation of a fabric having an irregular or rippled surface, provides for heightened visibility of the fabric without having a "mirror effect."

As seen earlier, synthetic fibers fabric 16 preferably comprises a weft made of metallized synthetic fibers.

For example, said metallized synthetic fibers has a metallization thickness of between 10 and 14 microns. Preferably, said metallized synthetic fibers has a metallization thickness of 12 microns.

According to one embodiment, the metallized synthetic fibers has a meters-per-kilo number Nm of between 120,000 and 130,000.

More preferably, said metallized synthetic fibers has a meters-per-kilo number Nm of 125,000.

Overall, fabric 16 made of extruded synthetic fibers embedded in said transparent coating layer 12 has a weight of between 120 and 160 g/m2.

More preferably, fabric 16 made of extruded synthetic fibers embedded in said transparent coating layer 12 has an overall weight of 144 g/m2.

Preferably, fabric 16 constituting a decorative pattern has a raised three-dimensional structure so as not to lie within a reference plane.

In particular, said fabric 16 constituting the decorative pattern has a "scuffed" finish comprising a plurality of ripples 20.

Ripples 20 may be made by means of a "scuffing" finish technique, as better described below.

It must be noted that the three-dimensionality of fabric 16 can be achieved either locally, that is, by means of said ripples 20 located at specific points, or overall, for example by macroscopically folding fabric 16 and "freezing" in said folded position within coating layer 12.

What is described above refers not only to fabric 16 having a weft and a warp comprising an extruded bulk-dyed synthetic fibers fabric; indeed, decorative pattern 8 can also comprise a non-woven fabric made of bulk-dyed extruded synthetic fibers, according to the same described features.

The method for making a piece of furniture in accordance with the present invention will now be described.

First of all, a fabric 16 according to the above description is needed.

Next, two plates 24, 28 defining a filling volume 32, delimited along the perimeter by a seal 36, are put in place.

The step of filling said filling volume 32 with a prepolymer in the liquid phase, preferably PMMA, is performed.

The fabric is then embedded in said prepolymer and the curing of the prepolymer is completed with fabric 16 embedded therein, so as to obtain panel 10.

It must be pointed out that, according to a possible embodiment, methyl methacrylate monomer or mixtures of acrylic and methacrylic monomers may be used as the starting material for coating layer 12. In the liquid state, this material is pumped into polymerization reactors where, with the addition of a reaction promoter and heating, a mixture of oligomers, called a prepolymer, is formed.

The reaction is essentially a controlled polymerization reaction that is greatly slowed at the right moment. Once the prepolymer has reached the desired viscosity, it is cooled and sent into refrigerated storage tanks. At this stage additives such as release agents, cross-linking agents, and dyes, as well as reaction and electric-charge modifiers, may be added.

The prepolymer is transferred to mixers where additional quantities of reaction promoter and additives such as release agents, cross-linking agents, and dyes, as well as reaction and electric-charge modifiers, may be added. The prepolymer thus obtained is injected or poured between said plates 24, 28, customarily made of glass, provided with their corresponding seal 36.

As we have seen, in this step fabric 16 is also embedded so that it is buried inside coating layer 12 consisting, at this stage, of the prepolymer and its additives.

In order to complete the polymerization, plates 24, 28 are submerged in sealed baths and heated to a temperature of between 30°C and 70°C.

Preferably, there is also the final step of tempering panel 10 of the piece of furniture using a temperature of 80° or more.

According the invention, in the step in which fabric 16 is embedded in the prepolymer, fabric 16 is placed so as not to be coplanar with the inside of filling volume 32.

As we have seen, it is also possible to create ripples 20 in fabric 16: to that end, before fabric 16 is embedded in filling volume 32, it is subjected to a "scuffing" finish.

The "scuffing" finish can be obtained, for example, as follows:
- fabric 16 is subjected to an air and/or steam pressure spray,
- fabric 16 is compressed through a volume of decreasing cross-section while said air and/or steam pressure spray is being applied.

This process can be repeated several times for a given time until the desired degree of scuffing, that is, three-dimensional relief, is obtained.

Subsequently, fabric 16 is removed from the machine and wound onto a roll, for example a cardboard tube.

As can be seen from the description above, the piece of furniture according to the invention overcomes the drawbacks of the prior art.

In particular, the present invention ensures color-fastness, thus avoiding the fading or uncontrolled color shifts that are typical of solutions with yarn-dyed fibers: this advantage is achieved substantially through the use of synthetic fibers that are mass-dyed (or bulk-dyed) .

In these solutions involving bulk-dyed fibers, the dye is not applied to the surface of the yarn but is instead applied directly in the yarn extrusion process.

In this way, as we have seen, one avoids color-shifting while the yarn is being embedded in the coating layer, and even mere fading of the yarn, which could at least partially cause contamination of the coating layer.

Indeed, any traces of dye lost by the coating layer of a dyed yarn would inevitably end up spoiling/contaminating the coating layer.

This invention gives the fabric a metallic surface effect that allows for accentuated, but not excessive, light reflection.

The particular irregular shape of the fabric, which involves ripples and/or folded portions so as not to be flat, makes the fabric visible in a three-dimensional way, thus avoiding a "mirror" effect.

This three-dimensional (relief) effect obtained through a finish called "scuffing," is then maintained within the layer of PMMA.

This is possible thanks to the present invention.

In an effort to meet specific and contingent requirements, an engineer in the field may apply numerous modifications and variants to the pieces of furniture and production methods described above, all of which are included in the scope of the invention as defined by the following claims.

## Claims

1. A piece of furniture (4) comprising
- a body (6) provided with at least one panel (10),
- the panel 10 being provided with at least one decorative pattern (8) embedded in a transparent coating layer (12),
**characterized in that**
- the decorative pattern (8) comprises a fabric (16) made of extruded bulk-dyed synthetic fibers,
- wherein said fabric (16) is at least partially metallized,
- wherein fabric (16) is placed so as not to be coplanar with the inside of transparent coating layer (12).

2. A piece of furniture (4) according to claim 1, wherein the fabric (16) made of bulk-dyed synthetic fibers has a warp with a linear density of between 150 and 180 dtex and wherein the weft of the fabric (16) is between 30 and 40 tr/cm.

3. A piece of furniture (4) according to any one of the foregoing claims, wherein the synthetic fibers fabric (16) comprises a weft made of metallized viscose and/or nylon.

4. A piece of furniture (4) according to claim 3, wherein said weft in viscose and/or nylon metallized has a metallization thickness of between 10 and 14 micrometers.

5. A piece of furniture (4) according to any one of claims 3 to 4, wherein said metallized synthetic fibers have a meters-per-kilo number Nm of between 120,000 and 130,000 and/or an overall weight of between 120 and 160 g/m2.

6. A piece of furniture (4) according to any one of previous claims, wherein said synthetic fibers comprise viscose and nylon.

7. A piece of furniture (4) according to any one of previous claims, wherein the percentage of viscose is comprised between 60% and 90% and, preferably, it is comprised between 70% and 80%.

8. A piece of furniture (4) according to any one of previous claims, wherein the synthetic fibers comprise 75% of viscose and 25% of nylon.

9. A piece of furniture (4) according to any one of the foregoing claims, wherein the fabric (16) constituting a decorative pattern (8) has a raised three-dimensional structure so as not to lie within a reference plane.

10. A piece of furniture (4) according to any one of the foregoing claims, wherein said fabric (16) constituting the decorative pattern (8) has a "scuffed" finish comprising a plurality of ripples (20).

11. A method for making a piece of furniture comprising steps for:
- preparing a fabric according to any one of claims 1 to 10,
- preparing two plates (24, 28) defining a filling volume (32), delimited along the perimeter by a seal (36),
- filling said filling volume (32) with a prepolymer in the liquid phase,
- embedding the fabric (16) in said prepolymer,
- completing the polymerization of the prepolymer with the fabric (16) embedded therein, so as to obtain the piece of furniture (4),
wherein, during the step for embedding the fabric (16) in the prepolymer, the fabric (16) is placed so as not to be planar within the filling volume (32).

12. A method for making a piece of furniture (4) according to claim 11 which includes a step for tempering the piece of furniture (4) at a temperature of 80° or more.

13. A method for making a piece of furniture (4) according to any one of claims 11 to 12, wherein the fabric (16) is subjected to a "scuffing" finish before it is embedded in the filling volume (32).

14. A method for making a piece of furniture (4) according to claim 13, wherein said "scuffing" finish comprises steps for:
- subjecting the fabric (16) to an air and/or steam pressure spray,
- compressing the fabric (16) through a volume of decreasing cross-section while said air and/or steam pressure spray is being applied.

## Patentansprüche

1. Ein Möbelstück (4), umfassend
- einen Körper (6), der mit mindestens einer Platte (10) versehen ist,
- wobei die Platte (10) mit mindestens einem dekorativen Muster (8) versehen ist, das in eine transparente Überzugsschicht (12) eingebettet ist,
**dadurch gekennzeichnet dass**
- das Dekorationsmuster (8) ein Gewebe (16) aus extrudierten, durchgefärbten synthetischen Fasern umfasst,
- wobei das Gewebe (16) zumindest teilweise metallisiert ist,
- wobei das Gewebe (16) so angeordnet ist, dass es nicht komplanar mit der Innenseite der transparenten Überzugsschicht (12) ist.

2. Möbelstück (4) nach Anspruch 1, wobei das Gewebe (16) aus durchgefärbten synthetischen Fasern eine Kette mit einer linearen Dichte von zwischen 150 und 180 dtex aufweist und wobei der Schuss des Gewebes (16) zwischen 30 und 40 tr/cm liegt.

3. Möbelstück (4) nach einem der vorstehenden Ansprüche, wobei das Kunstfasergewebe (16) einen Schuss aus metallisierter Viskose und/oder Nylon umfasst.

4. Möbelstück (4) nach Anspruch 3, worin der Schuss aus Viskose und/oder metallisiertem Nylon eine Metallisierungsdicke zwischen 10 und 14 Mikrometern aufweist.

5. Möbelstück (4) nach einem der Ansprüche 3 bis 4, wobei die metallisierten synthetischen Fasern eine Meter-pro-Kilo Zahl Nm zwischen 120.000 und 130.000 und/oder ein Gesamtgewicht zwischen 120 und 160 g/m2 aufweisen.

6. Möbelstück (4) nach einem der vorhergehenden Ansprüche, wobei die synthetischen Fasern Viskose und Nylon umfassen.

7. Möbelstück (4) nach einem der vorhergehenden Ansprüche, wobei der Prozentanteil der Viskose zwischen 60% und 90% und vorzugsweise zwischen 70% und 80% liegt.

8. Möbelstück (4) nach einem der vorhergehenden Ansprüche, wobei die synthetischen Fasern 75% Viskose und 25% Nylon umfassen.

9. Möbelstück (4) nach einem der vorstehenden Ansprüche, wobei das ein dekoratives Muster (8) bildende Gewebe (16) eine erhabene dreidimensionale Struktur aufweist, um nicht innerhalb einer Bezugsebene zu liegen.

10. Möbelstück (4) nach einem der vorstehenden Ansprüche, wobei das das dekorative Muster (8) bildende Gewebe (16) eine "abgewetzte" Oberfläche aufweist, die eine Vielzahl von Riffel (20) umfasst.

11. Verfahren zur Herstellung eines Möbelstücks, umfassend die Schritte für:
- Herstellen eines Stoffs nach einem der Ansprüche 1 bis 10,
- Herstellen von zwei Platten (24, 28), die ein Füllvolumen (32) definieren, die entlang des Umfangs durch eine Dichtung (36) begrenzt sind,
- Auffüllen des Füllvolumens (32) mit einem Vorpolymer in der Flüssigphase,
- Einbetten des Gewebes (16) in das Vorpolymer,
- Fertigstellen der Polymerisation des Vorpolymers mit dem darin eingebetteten Gewebe (16), um das Möbelstück (4) zu erhalten,
wobei während des Schrittes zum Einbetten des Gewebes (16) in das Vorpolymer das Gewebe (16) so angeordnet ist, dass es innerhalb des Füllvolumens (32) nicht planar ist.

12. Verfahren zur Herstellung eines Möbelstücks (4) nach Anspruch 11, das einen Schritt zum Temperieren des Möbelstücks (4) bei einer Temperatur von 80¡ oder mehr beinhaltet.

13. Verfahren zur Herstellung eines Möbelstücks (4) nach einem der Ansprüche 11 bis 12, wobei das Gewebe (16) einer "abwetzenden" Oberflächenbehandlung unterzogen wird, bevor es in das Füllvolumen (32) eingebettet wird.

14. Verfahren zur Herstellung eines Möbelstücks (4) nach Anspruch 13, wobei die "abwetzende" Oberflächenbehandlung Schritte umfasst für:
- Behandeln des Gewebes (16) mit einem Luft- und/oder Dampfdruckstrahl,
- Zusammendrücken des Gewebes (16) durch ein Volumen mit abnehmendem Querschnitt, während der Luft- und/oder Dampfdruckstrahl aufgebracht wird.

## Revendications

1. Élément de mobilier (4) comprenant
- un corps (6) pourvu d'au moins un panneau (10),
- le panneau (10) étant pourvu d'au moins un motif décoratif (8) incorporé dans une couche de revêtement transparente (12),
**caractérisé en ce que**
- le motif décoratif (8) comprend un tissu (16) composé de fibres synthétiques teintées dans la masse extrudées,
- dans lequel ledit tissu (16) est au moins partiellement métallisé,
- dans lequel le tissu (16) est placé de façon à ne pas être coplanaire avec l'intérieur de la couche de revêtement transparente (12).

2. Élément de mobilier (4) selon la revendication 1, dans lequel le tissu (16) composé de fibres synthétiques teintées dans la masse présente une chaîne avec une masse linéique comprise entre 150 et 180 dtex et dans lequel la trame du tissu (16) est comprise entre 30 et 40 tr/cm.

3. Élément de mobilier (4) selon l'une quelconque des revendications précédentes, dans lequel le tissu (16) de fibres synthétiques comprend une trame composée de viscose et/ou nylon métallisé.

4. Élément de mobilier (4) selon la revendication 3, dans lequel ladite trame en viscose et/ou nylon métallisé présente une épaisseur de métallisation comprise entre 10 et 14 micromètres.

5. Élément de mobilier (4) selon l'une quelconque des revendications 3 à 4, dans lequel lesdites fibres synthétiques métallisées présentent un nombre Nm de mètres par kilo compris entre 120000 et 130 000 et/ou un poids total compris entre 120 et 160 g/m2.

6. Élément de mobilier (4) selon l'une quelconque des revendications précédentes, dans lequel lesdites fibres synthétiques comprennent de la viscose et du nylon.

7. Élément de mobilier (4) selon l'une quelconque des revendications précédentes, dans lequel le pourcentage de viscose est compris entre 60 % et 90 % et, de préférence, il est compris entre 70 % et 80 %.

8. Élément de mobilier (4) selon l'une quelconque des revendications précédentes, dans lequel les fibres synthétiques comprennent 75 % de viscose et 25 % de nylon.

9. Élément de mobilier (4) selon l'une quelconque des revendications précédentes, dans lequel le tissu (16) constituant un motif décoratif (8) présente une structure tridimensionnelle relevée de façon à ne pas s'étendre dans un plan de référence.

10. Élément de mobilier (4) selon l'une quelconque des revendications précédentes, dans lequel ledit tissu (16) constituant le motif décoratif (8) présente une finition « froissée » comprenant une pluralité d'ondulations (20).

11. Procédé de fabrication d'un élément de mobilier comprenant des étapes consistant à :
- préparer un tissu selon l'une quelconque des revendications 1 à 10,
- préparer deux plaques (24, 28) définissant un volume de remplissage (32), délimité le long du périmètre par un joint (36),
- remplir ledit volume de remplissage (32) avec un prépolymère en phase liquide,
- incorporer le tissu (16) dans ledit prépolymère,
- achever la polymérisation du prépolymère avec le tissu (16) incorporé dans celui-ci, de façon à obtenir l'élément de mobilier (4),
dans lequel, durant l'étape consistant à incorporer le tissu (16) dans le prépolymère, le tissu (16) est placé de façon à ne pas être plan au sein du volume de remplissage (32).

12. Procédé de fabrication d'un élément de mobilier (4) selon la revendication 11 qui comprend une étape consistant à tremper l'élément de mobilier (4) à une température de 80° ou plus.

13. Procédé de fabrication d'un élément de mobilier (4) selon l'une quelconque des revendications 11 à 12, dans lequel le tissu (16) est soumis à une finition « de froissage » avant d'être incorporé dans le volume de remplissage (32).

14. Procédé de fabrication d'un élément de mobilier (4) selon la revendication 13, dans lequel ladite finition « de froissage » comprend les étapes consistant à :
- soumettre le tissu (16) à une pulvérisation d'air et/ou de vapeur sous pression,
- comprimer le tissu (16) à travers un volume de section transversale décroissante tandis que ladite pulvérisation d'air et/ou de vapeur sous pression est appliquée.
